# EUROPEAN PATENT SPECIFICATION

(11) **EP 1 131 949 B1**
(45) Date of publication and mention of the grant of the patent: **04.05.2005**
(21) Application number: 99958050.9
(22) Date of filing: 16.11.1999
(51) Int. Cl.: H04M 15/00

(54) **METHOD FOR EFFECTING TELECOMMUNICATION CONNECTIONS AT LOW COST AND A DEVICE FOR CARRYING OUT THE METHOD**
VERFAHREN UND VORRICHTUNG ZUR DURCHFÜHRUNG KOSTENGÜNSTIGER TELEKOMMUNIKATIONSVERBINDUNGEN
PROCEDE PERMETTANT D'EFFECTUER DES CONNEXIONS DE TELECOMMUNICATION A PRIX REDUIT ET DISPOSITIF PERMETTANT DE REALISER CE PROCEDE

(30) Priority: 20.11.1998 DE 19853697
(43) Date of publication of application: 12.09.2001
(73) Proprietor: MacroSystem Telecommunication GmbH, 58300 Wetter/Ruhr (DE)
(72) Inventor: Grabher, Wolfgang, La Jolla 92037, CA (US)
(86) International application number: PCT/EP1999/008800
(87) International publication number: WO 2000/031954

(56) References cited:
- US-A- 5 553 131
- US-A- 5 659 601
- US-A- 5 920 613

## Description

The invention concerns a method for effecting telecommunication connections in a telecommunication system having competing user rates, wherein a choice of a most economical rate for a given user is made based on data of competing rates contained in a memory, wherein these data represent prices in dependence on at least one of the following parameters, starting time for the communication connection, day of the week, holiday, and rate zone, the end time and the duration of a telecommunication connection and the data associated therewith belong to the above mentioned data for the rate, wherein the telecommunication connection is switched through without previous choice of one single rate.

In telecommunication systems in which a plurality of network providers having different rates effect telecommunication connections (telephone connections, telefax connections, data connections) via the public telecommunication network, the rates differ in dependence on week day, holiday, time of day, and between which locations the connection is effected. In case of a plurality of network providers, thereby results a multitude of possible combinations which make, through the checking of rate tables, a choice by the user of the most economical connection rate for a given situation extremely difficult. For this reason, so-called low-cost-routers have been available for connection at the user comprising a memory in which data of differing rates are stored and which, when the user intends to make a phone-call and based on the stored rates, the instantaneous time of day, the day of the week or holiday as well as the rate zone associated with the dialed number (in particular the area code), determine based on these data the most economical rate or its provider and then use the so-called call-by-call procedure to insert the number of the provider thereby determined, in this example a network provider, which proceeds the number dialed by the user but which has not yet been passed on to the public telecommunication network and then transmits this entire number combination into the public telecommunication network. The call can thereby be handled and invoiced by the previously determined provider, wherein the time duration of the call as well as the starting time and the ending time, which taken together define an important time window for the fees, are used to determine the fees calculated by the network provider.

One can optionally directly through-connect certain e.g. toll-free numbers (in Germany e.g. 0800) as well as expensive calls (in Germany e.g. 0190) without initiating a comparison of rates.

It is often the case that differences are obtained between calculation of the individual rates in dependence on the length of the conversation, wherein, e.g. when a conversation lasts only ten seconds a provider A is most economical, however, when the conversation lasts 50 seconds, a provider B is the most economical and when the conversation lasts 60 seconds or longer, a provider C is the most economical. Although this situation is known in the art, it has, up to this point in time, only been taken into consideration to a limited extent. Towards this end, a user attempts to influence the selection by the low-cost-router based on his telephoning habits (perhaps very short calls only or perhaps only very long conversations), wherein the low-cost-router attempts to effect the choice based on the previously communicated user telephoning habits. Rates can also be expressed in fee units.

A procedure of this type is increasingly imprecise the larger the number of different individuals calling from the terminal.

Another possibility is for the user who is in the process of routing an outgoing call to previously communicate the probable length of the call to a low-cost-router equipped to take into consideration different call lengths. In this manner, the user can often take advantage of a particularly low-cost rate. Should, however, the user indicate a longer call duration to have been envisioned for the connection and unintentionally dials a wrong party (e.g. dials the wrong number) then the choice of the rate based on the expected length of the conversation was made incorrectly and was not the most economical rate.

US-A-5 553 131 discloses a billing system providing the most cost-effective long distance service to a subscriber by analysing long-distance calls in the aggregate, comparing the cost thereof among several providers, and charging the subscriber based on the lowest cost.

The determination of the cost of the service is based either on mileage or aggregate time. In the first case, the duration of calls during a predetermined period of time is placed in one of a plurality of mileage bands. The duration of the calls is aggregated within each mileage band, and the cost associated with the band is determinded by multiplying the aggregated time duration by a cost factor per unit time. This cost per mileage band is calculated for different providers and a lowest cost for each mileage band is selected and charged to the subscriber. In a second case, calls are taken in chronological order, the duration of each specific call is added to the duration of the calls previously made, and the duration of the call in question is multiplied by variable cost factor per unit time. The variable cost factor provides a volume discount, since the cost factor per unit time decreases as the total duration of calls increases.

It is the underlying purpose of the invention to avoid the above mentioned disadvantages.

The invention avoids these disadvantages using a method of the above mentioned kind in that,
after the above
mentioned telecommunication connection has ended, the rate data of this connection are used to determine which rate is the most
economical for this connection while taking into consideration the duration
of the telecommunication connection and this most economical rate is taken into consideration when invoicing the user.

The rate is thereby chosen only after the conversation has ended taking into consideration the time duration of the conversation and other parameters as mentioned above or even additional parameters reflecting ways in which the individual rates differ from each other to determine the rate which would have been the most economical one and charging the user an amount for the conversation which comes as close as possible to this actual most economical rate and, in particular, corresponds exactly to this rate or, in fact, perhaps lies somewhat below this rate or, if the provider desires, perhaps lies somewhat above this rate.

In a variant of the method of the invention, determination of the most economical rate is made immediately after the end of the telecommunication.

In a variant of the method of the invention it is provided that the costs incurred between the calling party and the network of the provider having the most economical rate as well as the costs after leaving the network between the party being called and the network are taken into consideration when determining the most economical rate.

For the data transport, that is to say, for the telephone conversation, arbitrary public access paths can be utilized, e.g. the IP-method (telephone conversations using the internet protocol, IP). Internet telephoning is extremely low-cost and should be taken into consideration in the comparison given the availability of appropriate computer equipment to the users. In this way, even conversations over large distances can be effected at local conversation costs.

In accordance with a differing aspect, the invention concerns a method with which the fees for a telephone conversation (or any other type of telecommunication) in a public network are determined by the network or an intermediate distributor after completion of the connection and taking into consideration the start time, the end time, the duration of the connection, the rate zone and, optionally, other necessary parameters. Differently from the state of the art, not only one single rate (the rate of the network provider) is taken into consideration, but prior to calculation of the fees, a plurality of parameters mentioned above or other parameters which could be important or a selection thereof having a sufficient degree of distinguishability and predictability are used to select from the plurality of rates which are offered by other network providers or intermediate distributors, that rate which would be most economical for this call and utilizing this rate (not necessarily in the precise agreement therewith) the charges to the user are calculated for this connection. This is also true with appropriate modification when the invoice is effected by an intermediate distributor.

The invention also concerns devices for carrying out the method in accordance with the invention. One thereby assumes a network which is operated by a network provider and which, for each individual telecommunication connection, records the relevant data including the duration of the conversation in order to determine the fees. In accordance with the invention, determination of the fees uses a memory in which data of competing rates are contained and which are associated with individual parameters, wherein the end time and the duration of the connection belong to these parameters. Depending on whether or not the network provider or an intermediate distributor effects the calculation of the fees to the user, the fee calculation devices of the network provider or the intermediate distributor have access to the above mentioned memory having the data of competitive rates and perform, in the manner described above, either to exact agreement with the determined most economical rate or with deviations from this rate the calculation of the fee invoiced to the user.

In embodiments of the device in accordance with the invention, a conversation data memory is provided for in which the conversations or other telecommunication connections of a user can be separately stored in dependence on those rates with which the associated conversation is calculated. In this manner, it is advantageously possible for the network provider or for the intermediate distributor, at the end of an invoicing period, e.g. a month during which an individual fee related and already recorded for conversations by the user is actually invoiced, to easily provide for discounts (rebates) available from another network provider or intermediate distributor, e.g. in dependence on the volume of conversations and for the network provider or intermediate distributor utilizing the invention and to credit these to the user. Thereby, a single network provider or intermediate distributor has a large number of different possible accounts for a user each corresponding to one rate and-thereby corresponding to other network providers or intermediate distributors. Storing conversational data associated with differing rates, in particular, fees in a manner associated with the respective rate, was described above for a device, but is also considered to be an improvement of the method in accordance with the invention.

Instead of associating the data, including the fees, of individual conversations with the associated rate and thereby separately collect same, it is also possible to collect the data of an individual user initially, e.g. in purely chronological fashion within a particular invoicing time period and to separately evaluate and/or sort these data only when producing the invoice and using the individual rates which then, of course, must be contained in the individually stored conversation fee information.

The network can be a large or a small network, e.g. a local network or a city network.

In the embodiments described below, the retroactive calculation of a fee which is most advantageous for the user is carried out, for example, by a network provider who offers this possibility and, in another embodiment, it is carried out by an intermediate distributor who does not operate the network himself but has a contractional agreement with a network provider for "selling" telecommunication capacity of the network provider for individual conversations and who, using data delivered to him by the network provider concerning each individual conversation (including, of course, telefax connections or data connections) as a data set having all details which are necessary for comparison of rates and, in addition for communication to the user, e.g. along with a monthly invoice and break-down of the individual conversations according to the differing rate zones and/or with inclusion of the telephone number called, calculates the most economical rate and the fee for the conversation.

A proper method of operation of the method in accordance with the invention requires that the data concerning the rates and stored in the memory correspond to the actual rates offered by network providers or intermediate distributors.

When calculating the fees for a particular telephone conversation, as far as the fees which are to be charged to the user are concerned, one does not take into consideration which telephone communication path the subject telephone conversation actually was carried out on. Rather, advantageously to the user, one can simply assume for the calculation of the associated fee, that the connection was taken along the most economical path offered by the provider of the most economical rate.

In accordance with the invention, the user automatically has the advantage that even if a user must dial an area code in order to contact another individual living in a neighbouring location, wherein this connection is calculated as a local connection by one network provider, but is considered to be a long-distance call by another network operator, the local rate of the first mentioned provider is determined to be the least expensive rate and is then, with the possible deviations mentioned above, utilized as a basis for the invoicing the associated telephone call. This provides the technical and marketing possibility of actually invoicing a fee for this type of call to the user which is less than that of another network provider.

Further features and advantages can be derived from the subsequent description of embodiments of the invention with reference to the drawing showing details important to the invention and from the claims. These features can each be realized in embodiments of the invention individually or collectively in arbitrary combination.
- Fig. 1: shows a telecommunication system having a plurality of networks,
- Fig. 2: shows a first embodiment of a device in accordance with the invention,
- Fig. 3: shows a second embodiment of a device in accordance with the invention.

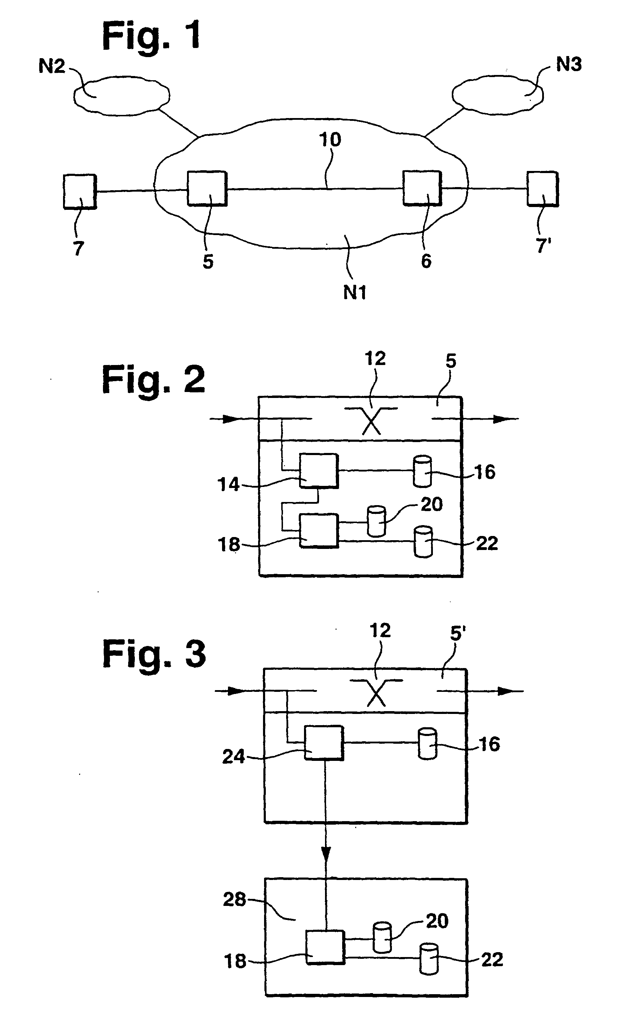

Fig. 1 schematically shows a telephone network N1 having a plurality (two are shown) of interconnection points 5 and 6. The terminal device 7 of a user is connected to the interconnection point 5 (exchange, switch) by means of a dialing procedure, and the terminal device 7' of a user resident in another city is connected to the interconnection point 6 and the two interconnection points are connected to each other via a sufficient number of transmission channels 10. The network N1 is connected to additional networks N2 and N3.

Fig. 2 schematically shows components important to the invention which, in the example, are associated with the interconnection point 5. To begin with, this point comprises in a conventional manner a coupling point network 12 by means of which a telephone conversation (the language telephone conversation, as described above, also refers to telefax communications or connections and a data connection) is switched from one calling user, disposed in accordance with the representation of Fig. 2 at the left, to a called user (right). Data concerning this conversation, conventionally contained in an call detail record (=CDR), contain information concerning the starting time of the connection, if the connection is transmitted by another network and optionally information concerning that path along which this communication has travelled, information concerning the external carriers (e.g. the network provider) who have passed the telephone conversation along and other necessary information (in particular the telephone numbers of the calling and called parties). These data are initially stored in a computing device 14 taking into consideration the end time of the conversation (this is the time when the conversation ended and by which the length of the conversation can be determined) and taking into consideration the rate of the network provider of the network N1 stored, in the example, in the computing device 14, for each individual conversation as a set of conversation fees contained within a memory 16, symbolized as a memory having a rotating memory medium. These fees are charged by the network provider to those users who have not taken advantage of the option for determining the least expensive rate.

In accordance with the invention, the interconnection point (ICP) 5 has a computing device 18 (in other embodiments of the invention the computing device is centrally disposed and connected by means of data connections to a plurality of ICPs) to which the call detail record associated with the instantaneously completed conversation is fed from the computing device 14. The computing device 18 uses the stored rate data of all other network providers or other distributors stored in a rate memory 20 which had been recognized as being important by the operator of the network N1 to determine that rate which, taking into consideration the beginning and the ending time, the duration, the day of the week and other possible important parameters, leads to the most economical conversational fee. The resulting fees and the call detail record are stored in a fee memory 22. The network provider can e.g. generate the monthly invoice for a particular user using the data stored in the fee memory 22. The network provider can then thereby also take into consideration possible volume rebates or other types of price reductions. In addition, the provider can use the determined conversational volume within a certain time period to carry out a comparison with all rate data in the computing device in order to check whether a different provider effects a larger volume rebate within this time period and to take this into consideration when calculating the fee.

In another embodiment of the invention, described in connection with Fig. 3, the network provider of the network N1 does not himself provide a fee calculation for the lowest possible costs. In this case, however, an intermediate distributor is present who cannot personally directly access the network N1, however, has an agreement with the provider of the network N1 permitting him to invoice participating users authorized by the intermediate distributor and otherwise recognizable by the network provider in some kind of fashion. The above mentioned recognition can, e.g. be effected in that the network provider knows the telephone numbers of these users or in that these telephone numbers are provided with a certain additional component via a technical device of the intermediate distributor. In order to facilitate invoicing, a network provider communicates the conversational data to the intermediate distributor. Towards this end, and in the configuration in accordance with Fig. 3, the left interconnection point in Fig. 1 which is provided with a reference symbol 5' in order to distinguish it from Fig. 2, and in contrast to the interconnection point 5 of Fig. 2 is configured in the conventional fashion such that a computing device 24 invoices the standard fees to a user who has telephoned over this network N1 without using an intermediate distributor and stores same in a memory 16 for each individual user.

The computing device 24 sends the data of the call detail record to the intermediate distributor for the authorized user via a transmissional channel 26, wherein the intermediate distributor has an evaluation unit 28 comprising a computing device 18 comparable to the computing device 18 of Fig. 2 and which also evaluates, for its part, rate data from a rate memory 20 in order to determine the most inexpensive rate for the call which has already been completed. In this case, as in Fig. 2, the data are stored in a fee memory 22. The intermediate distributor issues these fees as an invoice at the proper point of time to the users based on the fee data contained in the fee memory 22. The intermediate distributor himself is invoiced for fees by the network provider associated with the fees contained in the fee memory 16 (for example the sum of the fees minus a volume rebate).

The above mentioned association of an additional element to the call number of a calling user who is processed using this additional element by the network provider of the device 5', such that his data are passed on to the intermediate distributor, can be effected in a particular simple fashion when the intermediate distributor himself operates a telephone device by means of which a plurality of individual users and companies can each have access to an individual connection or to the features of a multi-terminal installation without these companies actually having a multi-terminal installation in their offices. Since, towards this end, the conversations travel over channels to which the intermediate distributor has access, the intermediate distributor can introduce a special characterizing feature into the call detail record. Such an intermediate distributor is then similar to a network provider in that, to a certain extent, he can influence technical apparatus and information (call detail record) which is passed therefrom onto another location.

The invention is intended to include such embodiments with which the user who, e.g. is served by the intermediate distributor and its technical apparatus 28 of Fig. 3 does not have access to reduced individual conversational telephones, rather, e.g. receives a fee rebate at the end of an invoicing period. In this case as well, the user finally pays reduced fees compared to those which he would have had to have paid to the network provider without the services of the device 28 operated by the intermediate distributor.

In other embodiments of the invention the network N1 is a local network, namely a city network having only one single interconnection point.

The above describes a method for effecting telecommunication connections for users in a telecommunication system having competing rates, wherein a selection of a rate which is the most economical for the user is made based on data stored in a memory containing competing rates, wherein these rates represent prices in dependence on at least one of the following parameters: Starting time of the telecommunication connection, day of the week, holiday, and rate zone. The method is characterized in that the ending time and the duration of a telecommunication connection and the data associated therewith are additional parameters belonging to the above mentioned rate data, the communication connection is switched without previously choosing any single one of the rate and, after the telecommunication connection has been ended, the rate data are used to determine that rate which would have been the most economical also taking into consideration the length of the telecommunication connection, wherein invoicing to the user takes into consideration this most economical rate. In this fashion, it is possible to invoice a lower fee for the conversation to the user.

## Claims

1. Method for effecting telecommunication connections for a user in a telecommunication system having competing rates, wherein a choice is made for a rate which is as economical as possible for the user based on data of competing rates contained in a memory, wherein these data represent prices in dependence on at least one of the following parameters, the starting time of the communication connection, the day of the week, holiday, the rate zone,
the end time and the duration of a telecommunication connection and the data associated therewith belong to the above mentioned data for the rate, wherein the telecommunication connection is switched through without previous choice of one single rate,
**characterized in that**
after the above
mentioned telecommunication connection has ended, the rate data of this connection are used to determine which rate is the most
economical for this connection while taking into consideration the duration
of the telecommunication connection and this most economical rate is taken into consideration when invoicing the user.

2. Method according to claim 1, wherein determination of the most economical rate is made immediately after the end of the telecommunication.

3. Method according to claim 1 or 2, **characterized in that** the
costs incurred between the calling party and the network of the provider having the most economical rate as well as the costs after leaving the network between the party being called and the network are taken into consideration when determining the most economical rate.

4. Method according to claim 1, 2 or 3, **characterized in that**
it is carried out by a network provider in his network.

5. Method according to any one of claims 1 through 4, **characterized in that**
it is carried out by an intermediate distributor in such a fashion that a network via which the intermediate distributor offers connections without being a network provider himself, provides a data set
(call detail record) to the intermediate distributor for each individual telecommunication connection and the intermediate provider uses this data set to determine which of the stored rates is the most economical for this call at this point in time in dependence on the duration of the call.

6. Method according to any one of the claims 1 through 5, **characterized in that** the
conversation fees of a user per invoicing period are associated with the rates utilized in each case and a sum is generated for each rate in such a fashion as to determine volume rebates, discounts or other types of price reductions contained in the
rates or in the regulations of the associated provider for the corresponding rates.

7. Device for carrying out a method according to any one of the claims 1 through 5 in using a network which is configured to carrying out the method, a memory (rate memory 20) being present in which data of a plurality of rates are stored in dependence on a plurality of parameters including the end time and connection duration, and a device (computing device 14) is provided to which data from the
network **characterizing** the conversation (call detail record, data file) can be fed, **characterized in that** this device is adapted to use this data from the individual conversations or
connections and the individual rates from the stored data to determine that rate which gives the lowest price for the particular call which has already ended.

8. Device according to claim 7, **characterized in that** the device is adapted to associate the conversation fees of a user per invoicing period
with the rates utilized in each case and to generate a sum for each rate in such a fashion as to
determine volume rebates, discounts or other types of price reductions contained in the
rates or in the regulations of the associated provider for the corresponding rates.

## Patentansprüche

1. Verfahren zum Bereitstellen von Telekommunikationsverbindungen für einen Teilnehmer in einem Telekommunikationssystem mit konkurrierenden Tarifen, wobei eine Auswahl eines für den Teilnehmer möglichst preisgünstigsten Tarifs anhand von in einem Speicher enthaltenen Daten von konkurrierenden Tarifen getroffen wird, wobei diese Daten Preise in Abhängigkeit von mindestens einem der folgenden Parameter, Startzeit der Kommunikationsverbindung, Wochentag, Feiertag, Tarifzone darstellen,
wobei die Beendigungszeit und die Dauer der Telekommunikationsverbindung und die zugehörige Daten zu den obengenannten Tarif-Daten gehören, wobei die Telekommunikationsverbindung durchgeschaltet wird, ohne zuvor einen einzigen Tarif auszuwählen,
**dadurch gekennzeichnet, dass**
nach Beenden der obengenannten Telekommunikationsverbindung die Tarifdaten dieser Verbindung verwendet werden, um festzustellen, welcher Tarif unter Berücksichtigung der Dauer der Telekommunikationsverbindung der preisgünstigste für diese Verbindung ist, und dass dieser preisgünstigste Tarif für die Abrechnung für den Teilnehmer herangezogen wird.

2. Verfahren nach Anspruch 1, wobei die Feststellung des preisgünstigsten Tarifs direkt nach dem Ende der Telekommunikation gemacht wird.

3. Verfahren nach Anspruch 1 oder 2, **dadurch gekennzeichnet, dass** beim Ermitteln des günstigsten Tarifs die zwischen dem rufenden Teilnehmer und dem Netz des Anbieters, der den günstigsten Tarif hat, entstandenen Kosten sowie auch die nach dem Verlassen des Netzes zwischen dem angerufenen Teilnehmer und dem Netz entstandenen Kosten berücksichtigt werden.

4. Verfahren nach Anspruch 1, 2 oder 3, **dadurch gekennzeichnet, dass** es von einem Netzanbieter in dessen Netz ausgeführt wird.

5. Verfahren nach einem der Ansprüche 1 bis 4, **dadurch gekennzeichnet, dass** es von einem Zwischenhändler / Wiederverkäufer so ausgeführt wird, dass ein Netz, über welches der Zwischenhändler Verbindungen anbietet, ohne selbst ein Netzanbieter zu sein, dem Zwischenhändler einen Datensatz (call detail record) für jede einzelne Telekommunikationsverbindung bereitstellt und der Zwischenanbieter diesen Datensatz verwendet, um zu ermitteln, welcher der gespeicherten Tarife der preisgünstigste für diesen Anruf zu diesem Zeitpunkt in Abhängigkeit von der Dauer des Anrufs ist.

6. Verfahren nach einem der Ansprüche 1 bis 5, **dadurch gekennzeichnet, dass** die Gesprächsgebühren eines Teilnehmers pro Abrechnungsperiode den in jedem Fall verwendeten Tarifen zugeordnet werden und für jeden Tarif eine Summe gebildet wird, derart, dass in den Tarifen oder in den Geschäftsbedingungen des den entsprechenden Tarifen zugeordneten Anbieters enthaltene Mengenrabatte, Preisabschläge oder andere Arten von Preisnachlässen ermittelt werden.

7. Vorrichtung zum Durchführen eines Verfahrens nach einem der Ansprüche 1 bis 5 bei Verwendung eines Netzes, welches zum Ausführen des Verfahrens ausgebildet ist, wobei ein Speicher (Tarifspeicher 20) vorhanden ist, in welchem Daten einer Mehrzahl von Tarifen in Abhängigkeit von einer Mehrzahl von Parametern einschließlich der Beendigungszeit und Verbindungsdauer gespeichert sind, und eine Vorrichtung (Berechnungsvorrichtung 14) vorgesehen ist, an welche Daten von dem Netz, die das Gespräch kennzeichnen (call detail record, data file) zugeführt werden können, **dadurch gekennzeichnet, dass** diese Vorrichtung so ausgebildet ist, dass sie diese Daten von den einzelnen Gesprächen oder Verbindungen und die Einzeltarife von den gespeicherten Daten verwendet, um jenen Tarif zu ermitteln, welcher den niedrigsten Preis für den bestimmten Anruf, der bereits beendet wurde, ergibt.

8. Vorrichtung nach Anspruch 7, **dadurch gekennzeichnet, dass** die Vorrichtung so ausgebildet ist, dass sie die Gesprächsgebühren eines Teilnehmers pro Abrechnungsperiode den in jedem Fall verwendeten Tarifen zuordnet und eine Summe für jeden Tarif dergestalt erzeugt, dass Mengenrabatte, Preisabschläge oder andere Arten von Preisnachlässen, die in den Tarifen oder Geschäftsbedingungen des zugehörigen Anbieters für die entsprechenden Tarife enthalten sind, ermittelt werden.

## Revendications

1. Méthode pour effectuer des connexions de télécommunications pour un utilisateur dans un système de télécommunications ayant des tarifs en concurrence, dans laquelle un choix est fait pour un tarif qui est le plus économique possible pour l'utilisateur sur la base de données de tarifs en concurrence contenues dans une mémoire, dans laquelle ces données représentent des prix dépendant au moins de l'un des paramètres suivants, le moment du début de la connexion de télécommunications, le jour de la semaine, le jour férié, la zone tarifaire, le moment de la fin et la durée d'une connexion de télécommunications et les données qui leur sont associées font partie des données mentionnées ci-dessus pour le tarif, dans laquelle la connexion de communications est établie sans choix préalable d'aucun tarif,
**caractérisée par le fait que**
après que la connexion de télécommunications ci-dessus mentionnée ait été terminée, les données tarifaires de cette connexion sont utilisées pour déterminer quel est le tarif le plus
économique pour cette connexion tout en prenant en considération la durée
de la connexion de télécommunications et ce tarif qui est le plus économique est pris en considération lors de la facturation de l'utilisateur.

2. Méthode conformément à la revendication 1, dans laquelle la détermination du tarif le plus économique est faite immédiatement après la fin de la télécommunication.

3. Méthode conformément à la revendication 1 ou 2,
**caractérisée par le fait que** les
frais encourus entre l'abonné appelant et le réseau du pourvoyeur ayant le tarif le plus économique ainsi que les frais après avoir quitté le réseau entre l'abonné demandé et le réseau sont pris en considération lors de la détermination du tarif le plus économique.

4. Méthode conformément à la revendication 1, 2 ou 3,
**caractérisée par le fait**
**qu'**elle est réalisée par un pourvoyeur de réseau dans son réseau.

5. Méthode conformément à n'importe laquelle des revendications 1 à 4,
**caractérisée par le fait**
**qu'**elle est réalisée par un distributeur intermédiaire de telle sorte qu'un réseau par lequel le distributeur intermédiaire offre des connexions sans être lui-même un pourvoyeur de réseau, fournit un ensemble de données (enregistrement détaillé d'appels) au distributeur intermédiaire pour chaque connexion de télécommunications individuelle et le pourvoyeur intermédiaire utilise cet ensemble de données pour déterminer lequel des tarifs mémorisés est le tarif le plus économique pour cet appel à ce moment dépendant de la durée de l'appel.

6. Méthode conformément à n'importe laquelle des revendications 1 à 5,
**caractérisée par le fait que** les
taxes conversationnelles d'un utilisateur par période de facturation sont associées aux tarifs utilisés dans chaque cas et un montant est produit pour chaque tarif de manière à déterminer les rabais sur le volume
des réductions ou autres types de réduction de prix contenus dans les tarifs ou dans la réglementation du pourvoyeur associé pour les tarifs correspondants.

7. Dispositif pour réaliser une méthode conformément à n'importe laquelle des revendications 1 à 5 en utilisant un réseau qui est configuré pour réaliser la méthode, une mémoire (mémoire tarifaire 20) étant présente dans laquelle lès données d'une pluralité de tarifs sont enregistrées dépendant d'une pluralité de paramètres y compris le moment de la fin et la durée de la connexion, et un dispositif (dispositif informatique 14) est prévu auquel des données à partir du réseau caractérisant la conversation (enregistrement détaillé d'appels, fichier) peuvent être envoyées, **caractérisé par le fait que** ce dispositif est conçu pour utiliser ces données à partir des conversations individuelles ou
des connexions et les tarifs individuels à partir des données enregistrées pour déterminer le tarif qui donne le prix le plus bas pour l'appel particulier qui a été déjà terminé.

8. Dispositif conformément à la revendication 7, **caractérisé par le fait que** le dispositif est conçu pour associer les taxes conversationnelles d'un utilisateur par période de facturation
avec les tarifs utilisés dans chaque cas et pour produire un montant pour chaque tarif de manière à
déterminer les rabais sur le volume des réductions ou autres types de réduction de prix contenus dans les tarifs ou dans la réglementation du pourvoyeur associé pour les tarifs correspondants.
